# EUROPEAN PATENT APPLICATION

(11) **EP 2 383 488 A2**
(43) Date of publication of application: **02.11.2011**
(21) Application number: 11164281.5
(22) Date of filing: 29.04.2011
(51) Int. Cl.: F16F 15/34

(54) **A clip and a weight for a wheel balance assembly and a method of manufacture of a wheel balance assembly**

(30) Priority: 30.04.2010 GB 1007262
(71) Applicant: Trax Jh Ltd., Newtown, Powys SY16 4LE (GB)
(72) Inventor: Halle, John, Newtown, Powys SY16 4LE (GB); Watkin, Richard Adam, Newtown, Powys SY16 4LE (GB)
(74) Representative: Gosnall, Toby

(57) **Abstract**

A wheel balance clip (1) arranged to attach a balance weight to a wheel, the wheel balance clip (1) comprising a spring portion (2) arranged to accommodate and attach to a rim of a wheel, a balance weight mounting portion (4) depending from the spring portion (2), the mounting portion (4) having a first side (10) arranged, in use, to be adjacent to a wheel on which the clip (1) is mounted and a second side (12) arranged to receive a weight, and opposing jaws (14), comprising a clasp and a retaining means, the clasp and retaining means being directed toward one another and being arranged, in use, to positively engage into a groove in a balance weight and retain therebetween a balance weight on the second side (12) of the mounting portion (4).

## Description

### Field of the Invention

This invention relates to a clip and a weight for a wheel balance assembly and to a method of manufacturing a wheel balance assembly.

### Background of the Invention

Where a tyre fitted to a wheel or the wheel itself is heavier at one side than the other an out of balance vibration can manifest during rotation of the wheel which can cause a noticeable vibration on the steering wheel of a vehicle and even through the vehicle itself of the vehicle to which the wheel is fitted. Uneven rotation and vibration can cause tyres and mechanical parts of the vehicle to wear more quickly and ultimately could cause the vehicle to be unsafe. Wheel balance assemblies are used to correct out of balance defects on tyred wheels and are arranged to be able to attach to the rims of a wheel used by vehicles such as cars buses, trucks and the like.

When a wheel or tyre is found to have a heavier portion and wheel balance assemblies are used to correct an out of balance defect a wheel balance assembly of compensatory measure may be attached to the rim of the wheel diametrically opposite to the heavier portion of the tyre/wheel.

In some types of wheel such wheel balance assemblies are provided by a balance weight and clip. Wheel balance assemblies of varying weights can be provided by varying the mass of the balance weight used.

Traditionally lead or zinc balance weights have been used since these materials are relatively cheap and malleable. Recent legislation has stimulated a move away from the use of lead and steel has been considered as an alternative material. However it has been found that the use of steel can cause difficulties with securing the clip to the balance weight. In the applicant's earlier application No PCT/GB2009/001092 it is disclosed that if steel is used the clip may be welded to the balance weight by annealing the clip and the weight prior to welding. During the welding process the zinc plating may be burnt off and it is then necessary to apply a coating such as a plastic based powder coating or additional zinc plating in order to meet the corrosion resistance requirements that are stipulated for wheel balance assemblies.

One balance clip and weight arrangement is shown in DE10 2006 039 485 in the name of Dionys Hofmann GmbH.

Inclusion of the annealing and welding process slows the rate of production of the wheel balance assemblies and increases the cost, as does the use of coatings, such as polymer or zinc coatings.

### Summary of the Invention

According to a first aspect of the invention there is provided a wheel balance clip arranged to attach a balance weight to a wheel. tThe wheel balance clip may comprise a spring portion arranged to accommodate and attach to a rim of a wheel and a balance weight mounting portion depending from the spring portion. The spring portion and the balance weight mounting portion may be joined together by a connecting portion. The mounting portion may have a first side arranged to be adjacent to a wheel on which the clip is mounted in use and a second side arranged to receive the weight. The clip may comprise opposing jaws adapted to positively engage and retain the balance weight in use being provided on the second side of the mounting portion.

Such an embodiment is believed advantageous as it provides a clip that can securely maintain a weight in place and which facilitates quicker manufacture of a wheel balance assembly incorporating the clip when compared to prior art clips.

Conveniently, the jaws comprise an inwardly directed clasp and a second inwardly directed retaining means.

Conveniently, the clip is arranged to, in use, secure the balance weight between the clasp and the retaining means. Generally the clip is not welded to the weight.

In one embodiment the clasp is formed by a tang cut out of a portion of the connecting portion and may in one embodiment be cut out of a portion of the connecting portion and a portion of the spring portion. It is desirable that the tang is arranged to project in a direction opposed to the spring portion. Opposed may generally mean directed away from.

Conveniently, the ends of the tang and the retaining means are generally arranged to face one another. Such an arrangement is convenient since it allows the ends to be received within a slot in a balance weight held by the clip thereby covering the ends to remove edges that may cut a user, etc. Further this can help prevent the wheel balance weight assembly be pulled from a wheel by the action of car washes and the like.

The tang may be centrally located in a length of the connecting portion. It has been found that the formation of the clasp in this fashion imparts an independence of movement to the clasp and that movement of the spring portion does not impart a consequential movement to the tang. An advantage of this is that the tang is unaffected by movement of the spring portion in fitting the clip to the wheel and movement and deflection of the spring portion does not cause the tang to release a weight held between the jaws of the clip.

The second inwardly directed retaining means may comprise one or more tabs and some embodiments may comprise two tabs. The or each tab may be located along a length of the mounting portion opposed to the connecting portion. Conveniently the length of the mounting portion comprises a side of the mounting portion. The or each tab may comprise a leg extending away from the first side of the mounting portion. The leg may be planar or may be curved. The or each tab may further comprise an inwardly directed lip at a distal end of the leg. The lip may be arranged to project generally towards the tang.

Embodiments in which the, or each, leg is curved are believed advantageous in order to reduce the chance of catching on the clip when it is in situ on a wheel. For example a person washing a car may cut his / her hand on sharp protrusions from a clip and as such it desirable if sharp protrusions can be reduced.

In one embodiment the retaining means comprises two tabs having curved legs and lips extending towards the tang.

Conveniently the mounting portion has a planar section. The tabs may be arranged with a centrally located groove or cut-out between the tabs. The cut-out may extend into the planar section of the mounting portion.

In some embodiments one or more cams may be provided on the first side of the mounting portion. The or each cam may be formed by pressing out a portion of the mounting portion. The cam typically provides improved location and attachment of the wheel balance assembly on a wheel in use as described in GB2 442 715. The teaching of this document, and in particular the teaching in relation to the cams, is hereby incorporated by reference.

In one embodiment two cams are provided on the first side of the mounting portion and may be located adjacent to and the tabs.

One or more further cams may be provided on the spring portion. The or each further cam is conveniently arranged to be directed away from the tang and to engage with the wheel rim when the clip is fitted to the rim. The or each further cam locates and assists in securing the clip to the wheel in use.

Conveniently, the clip is provided with one or more interlocks which provide portions which are arranged to engage a weight positioned, in use, within the clip. The inter-locks may be arranged to be deformed to engage the weight.

According to a second aspect of the invention there is provided a wheel balance assembly comprising a balance weight and a clip in accordance with the first aspect of the invention.

According to a third aspect of the invention there is provided a balance weight suitable for use with a clip in accordance with the first aspect of the invention to form a wheel balance assembly.

Conveniently, the balance weight may be formed by stamping from sheet steel. Alternatively the balance weight may be formed from an extruded steel profile. Alternative material may be used and the weight may be stamped or extruded or formed in an alternative manner.

A coating may be used on some or all of the balance weight to increase the corrosion resistance of the weight. The coating may be a zinc coating and/or a plastics material coating, such as a polymer coating. The coating may be applied to one or more surfaces of the weight.

Typically a zinc coating may be applied as an electro plating or a dip & spin process. Such coatings, sometimes in conjunction with additional surface treatments, may be able to provide up to 600 hrs of protection against salt spray using the American Society for Testing and Materials (ASTM) B117 process for testing.

Such additional surface treatments include applying a passivate, which as the skilled person will appreciate is commonly applied after zinc electro-plating has been provided. In some embodiments a passivate may be applied to either or both of the clip and the weight to be attached thereto prior to completion of the assembly (ie joining the clip and the weight). The passivate coating may be in the form of a clear lacquer.

In embodiments in which the coating applied to both the clip and the weights is a zinc electro-plating with an additional passivate, it is expected that a minimum of 240 hours resistance to a salt spray test will be achieved (under ASTM B117). Such an embodiment would be exemplified by an 8pm zinc electro-plating with an additional clear passivate lacquer applied.

In another embodiment a 15*µ*m zinc electro-plating is applied. Such a coating is generally accepted to provide approximately 160 hours resistance to a salt spray test (under ASTM B117).

Additionally, or alternatively other coatings may be used to increase corrosion resistance. For example a plastics material coating may be applied. This may be applied over a zinc electro plating, either on its own, or with an additional passivation surface treatment.

Conveniently a plastics material coating has a thickness roughly in the range of 4 *µ*m to 140 *µ*m, More conveniently from 40*µ*m to 140*µ*m.

Conveniently, the same coating is applied to the weight and to the clip.

Alternative coatings may be applied to the clip and/or the weight. The coating may additionally serve other functions. The coating may colour code the wheel balance weight assembly. An indication of the weight of the balance may also be imprinted in the coating. Markings may be engraved in the zinc coating and the passivate coating may be applied after the zinc coating has been engraved. Alternatively marking may be applied with or after the passivate coating or indeed in addition to markings in the zinc plating. Markings can be made by ink jet, black or colour coded, either on top of the zinc electro-plating (with or without passivation) or on top of a plastic coating. Alternative methods of marking the weight include the use of laser or thermal printing, black or colour coded, or any other suitable means of applying markings.

The balance weight may be provided in different sizes each having a different mass. The size of the balance weight may vary with the mass of the weight. In general a weight having a greater mass is relatively longer than a weight having a smaller mass. Conveniently a transverse dimension or width of the weights is roughly the same for each of the masses of the weights irrespective of the mass thereof.

However, in some embodiments, the width of mass may be increased in balance weights of a higher mass.

The tang and tabs may be arranged to clamp in place over the weight. The weight may be provided with a shoulder arranged to receive the tang. The weight may additionally be provided with one or more grooves in a side face and the or each groove is dimensioned to receive the lip of the or each tab. That is, the length of each groove may be less than the length of balance weight in which it is created.

The shoulder may be provided in one side face of the weight and the groove may be provided in an opposing side face of the weight. Side faces of the weight may be formed of steel and may be hardened. Faces of the weight may be provided with a coating. The coating may in particular be of zinc and/or a passivate or other coating as described above. A face, which may be the front face of the weight may be provided with marking and/or colour coding to assist in identification of the weights for use in balancing a wheel.

The weight may comprise one or more protrusions, which may be at end regions of the weight, which are arranged to engage, in use, a wheel on which the wheel balance assembly is mounted. Such protrusions can help the weight seat correctly and may reduce vibration of the weight and/or movement of the weight relative to the clip.

According to a fourth aspect of the invention there is provided a kit comprising a plurality of clips according to the first aspect of the invention and a plurality of weights, at least some of which have a different mass when compared to other weights in the kit, wherein each of the weights is dimensioned such that it is receivable within a clip of the kit.

Generally, each of the weights in the kit has the same width. However, in some embodiments the weights may be of a plurality of widths, wherein weights of a higher mass are thicker.

According to a fifth aspect of the invention there is provided a method of manufacturing a wheel balance assembly, which may be according to the second aspect of the invention, the method comprising providing a clip according to the first aspect of the invention and a balance weight, which may be according to the third aspect of the invention;
positioning at least one of the clip and the weight;
orientating the clip and the weight relative to one another, and
snap fitting the clip and the weight together.

The clip may be positioned first and the balance weight orientated relative to the clip. Conveniently the balance weight is orientated such that the balance weight can be inserted between the jaws of the clip and rolled or rotated between the jaws of the clip and around the weight.

Alternatively the balance weight may be positioned first and the clip orientated relative to the weight. The clip is conveniently orientated with the jaws either side of the balance weight and the clip may be rolled relative to the balance weight so as to snap fit around the balance weight.

Embodiments which use a rolling motion are believed advantageous as the rolling motion may tend to open jaws of the clip and therefore facilitate insertion of the weight within the clip. If such a rolling motion is not used then other embodiments may apply a force to jaws of the clip in order to open jaws thereof to allow the weight to be inserted.

Once the clip and balance weight have been snap fitted together the balance weight assembly may be fed out of the production line in the normal manner.

A plastics material coating may be applied to the balance weight assembly. Such coatings may provide additional resistance to corrosion as exemplified by a salt spray test (such as ASTM B117) or may provide other advantages or features. It may for example be desirable to apply a colour coding to the balance assemblies. It may be more convenient to apply a coating or colour coding to the balance weight prior to assembly with the clip.

Alternatively, or additionally, other material coatings may be applied to the assembly. Such coatings may comprise applying a passivate, which as the skilled person will appreciate is commonly applied after a zinc plating has been provided. In some embodiments a passivate may be applied to either or both of the clip and weight prior to completion of the assembly.

In embodiments in which the coating applied to an assembled balance weight assembly is a zinc plating, with or without an additional passivate, it is expected that a minimum of 240hours resistance to a salt spray will be achieved (under ASTM B117).

In embodiments in which an additional plastics material coating is applied then it is expected that a minimum of 600hours resistance to a salt spray test will be achieved (under ASTM B117).

In some embodiments substantially no further processing is applied once the clip and weight have been combined. Such an embodiment is believed advantageous since it reduces the processing time and as such reduces cost and increases efficiency. In such embodiments, it may be that a coating applied to the surface of the weights and/or clips is sufficient to prevent corrosion thereof (or it does not matter if corrosion occurs). For example, the clip and/or the weight may be electro plated, may be with zinc, prior to assembly into a wheel balance assembly.

In one embodiment of the method the balance weight is modified prior to assembly by the formation of a shoulder and/or a groove arranged to cooperate with the jaws of the clip and securely engage the weight onto the clip. Such an embodiment may allow the weight to be fabricated in a simple process such as stamping whereas more complex steps, such as formation of the shoulder and/or groove are added later and as such allow less precise manufacturing techniques by used to produce a weight blank (ie a weight without a shoulder and/or groove). Further, formation of the shoulder and/or groove may not destroy a surface finish (such as a coating) applied to the weight.

The shoulder and/or groove may be formed on side faces of the balance weight.

A particular advantage of the method is that the balance weight may be formed of stamped steel which is cheaper to manufacture than a complex shape requiring extrusion of the steel in a profiled shape or other forms of fabrication. In addition rate of production of stamped weights is relatively quick. The stamped balance weight does not have to be manufactured to high degrees of tolerance.

Another advantage of the method is that the same clip can be used for each size of weight and therefore it is not necessary to manufacture a clip for each size of weight. Additionally the forming of the groove and/or shoulder can be carried out separately to the formation of the clip and the weight and can be performed to a higher degree of accuracy; a groove and/or shoulder may subsequently be provided to formation of the weight but to a higher degree of accuracy than formation of the weight itself.

The disclosed method of manufacture is quicker than the prior art method of annealing and welding the clip to the weight. A reduction in time to assemble a balance weight assembly in the order of 40% has been achieved.

The disclosed method snap fits the clip and the weight together. The capital cost of the apparatus for the disclosed method is significantly lower than the capital cost of annealing and welding the clip and balance weight together.

Conveniently, the shoulder and/or groove are formed as part of the assembly. The shoulder may be formed by application of pressure to the balance weight. A single groove adapted to receive the lip or lips of the tabs may be formed in the balance weight. Alternatively two grooves may be provided in the side face of the balance weight and each groove may be dimensioned to receive the lip of a respective tab of the clip. The or each shoulder and/or groove may be formed with a high accuracy such that the weight is securely held in the clip.

Conveniently means of providing longitudinal stability of the weight relative to the clip are provided. In one embodiment a length of the shoulder and or the groove may be arranged to provide longitudinal stability. Some embodiments may contain two grooves provided in order to provide a lateral stability and restraint to the balance weight. Alternatively means such as a projection may be provided to prevent the weight moving relative to the clip.

Additionally, or alternatively, the method may deform a portion of the clip to engage with the weight. Such a step is believed advantageous to help prevent the weight moving relative to the clip.

Conveniently, the clip is provided with one or more interlocks which provide the portions which are arranged to engage the weight. The method may, after the weight is positioned within the clip, deform the interlocks into the weight.

It is desirable that the weight is securely engaged in the clip as the weight is located away from the wheel and if the balance weight were not securely engaged there would be a risk that the weight could become dislodged and fly off the wheel. Given that the wheel may be rotating at high speed the balance weight would present a dangerous hazard should it become dislodged.

The features of any one aspect of the invention may be applied mutatis mutandis to any other aspect of the invention.

An embodiment of the invention will now be described by way of example only with reference to the accompanying drawings in which
**Figure 1** is a perspective view of a first side of a clip in accordance with a first aspect of the invention;
**Figure 2** is a perspective view of a second side of the clip;
**Figure 3** is a side view of the clip;
**Figure 4** is an elevation of the second side of the clip as shown in
Figure 2;

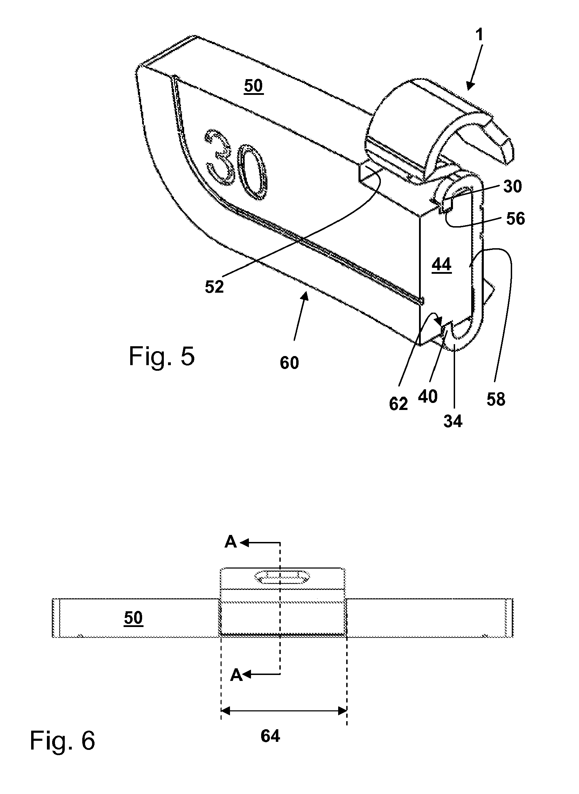

**Figure 5** is section through a balance weight assembly in accordance with a second aspect of the invention;
**Figure 6** is a top view of the balance weight assembly;

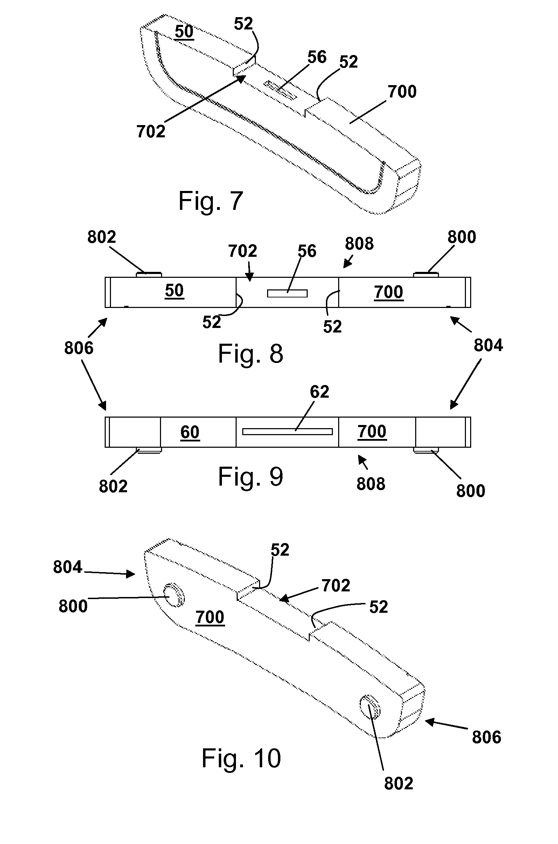

**Figure 7** shows a perspective view of a front side of a wheel balance weight according to a third aspect of the invention;
**Figure 8** shows a top plan view of the weight of Figure 7;
**Figure 9** shows a bottom plan view of the weight of Figure 7;
**Figure 10** shows a perspective view of a rear side of the weight of Figure 7;

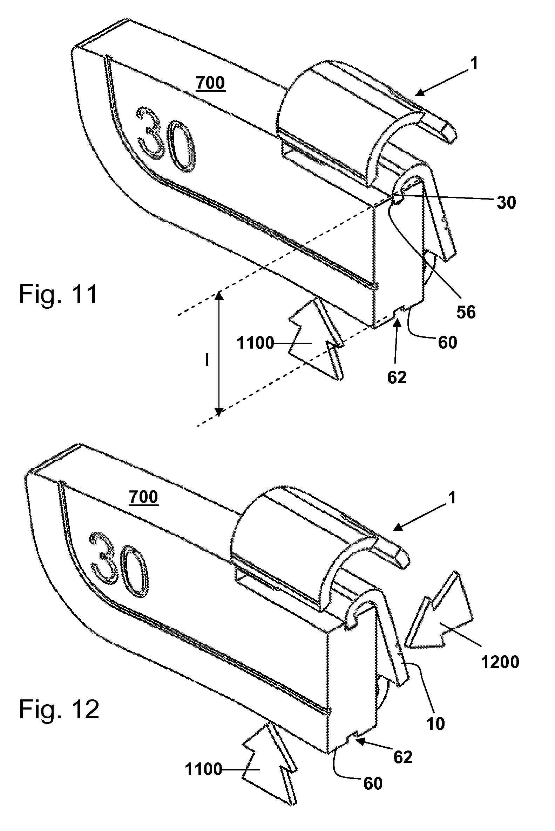

**Figure 11** shows a first step in assembling the wheel balance assembly of Figures 5 and 6;
**Figure 12** shows a second step in assembling the wheel balance assembly;

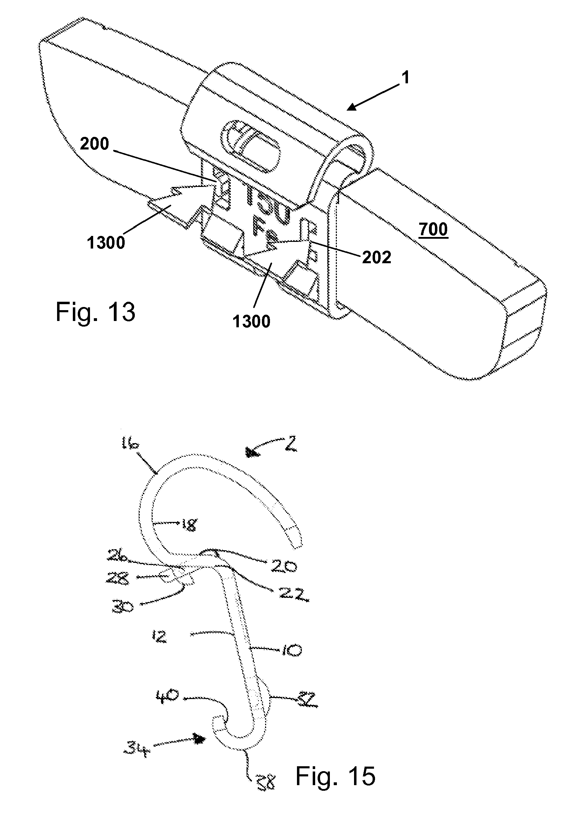

**Figure 13** shows a further step in assembling the wheel balance assembly;

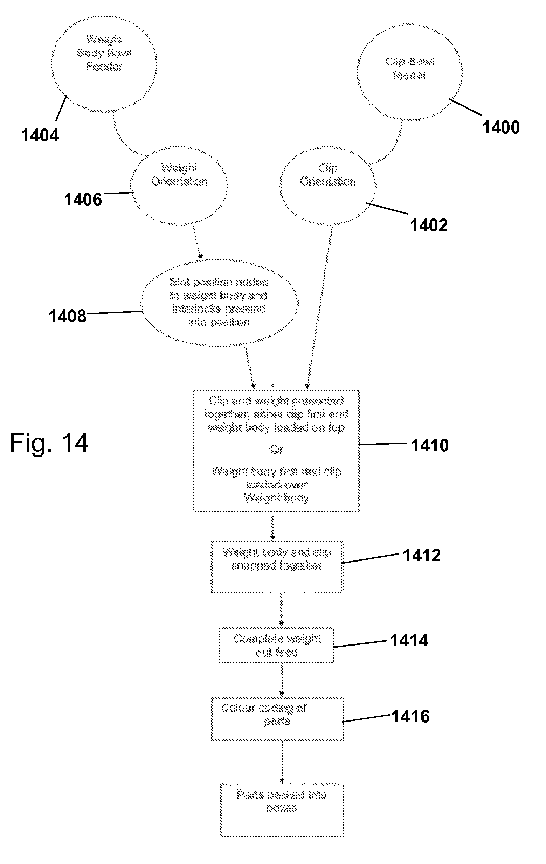

**Figure 14** shows a flow chart outlining stages in assembling the wheel balance assembly of Figures 11 to 13; and

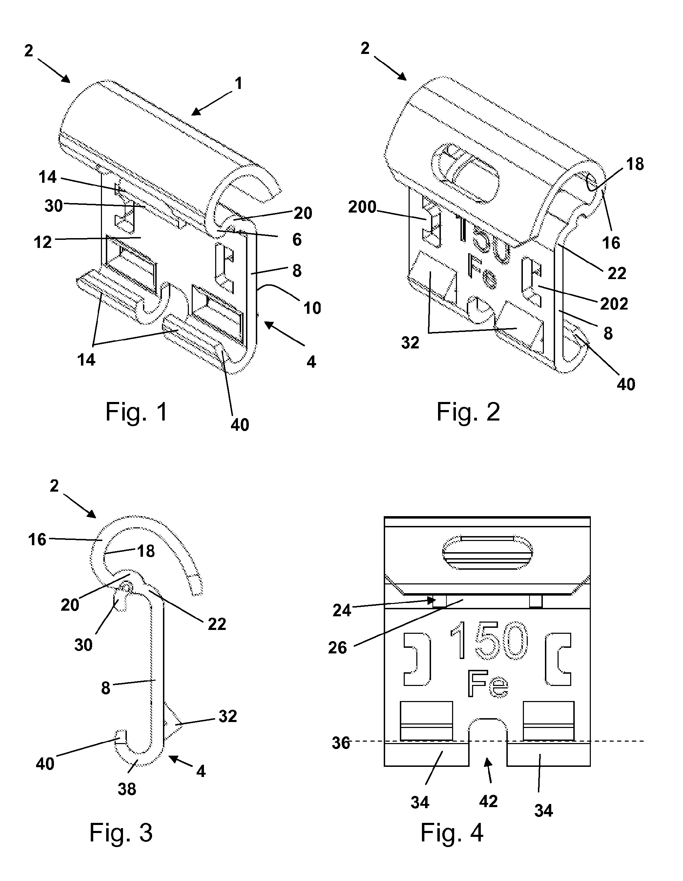

**Figure 15** shows an alternative arrangement of a clip to that shown in Figure 3.

Figure 1 is a perspective view of a wheel balance clip 1 suitable for attaching a balance weight to a rim of a wheel of a vehicle. The wheel balance clip comprises a spring portion generally indicated at 2 and a balance weight mounting portion 4 depending from the spring portion and joined thereto by a connecting portion 6. The mounting portion comprises a planar section 8 having a first side 10 which is adjacent to the wheel of a vehicle on which the clip 1 is mounted in use. The planar section 8 has a second side 12 arranged to receive the weight. The mounting portion 4 has opposing jaws 14 provided on the second side 12 of the mounting portion 4 which are arranged, in use, to maintain a weight on the clip 1.

As can be seen in Figures 2 and 3 the spring portion 2 comprises an arched arm 16 arranged to fit over and engage a rim of a wheel to which the clip is to be fitted. The connecting portion 6 is contiguous with the arm 16 and has an inner surface 18 which in this embodiment is provided with cams 20 that may interact with the rim of the wheel to position the clip more securely in place on the wheel rim and may also help to resist removal of the clip from a rim.

The connecting portion 6 is angled generally perpendicular to the mounting portion 4 of the clip and joins the mounting portion at a base 22 of the connecting portion. A cut out 24 is centrally located in the connecting portion and the material removed to form the cut-out 24 forms a tang 26 which extends from the base 22 of the connecting portion to form an inwardly (ie toward a lower lip 40) directed clasp. The tang 26 extends away from the mounting portion 4 and projects at an incline away from the connecting portion 6 such that the tang 26 extends over the mounting portion. The tang 26 has a lip 30 which in this embodiment has been formed by bending and end region of the material forming the tang 26. The interaction of the clasp and a balance weight secured in the clip will be further described below. In this embodiment, the lip 30 provides one of the opposing jaws 14.

The first side 10 of the mounting portion 4 is adjacent to the rim of a wheel to which the clip is attached. Further cams 32 are located on the first side of the mounting portion toward a bottom region (as viewed in the Figure) thereof - ie in a region toward the axis of a wheel on which the clip is, in use, fitted. The cams 32 act on the rim of the wheel to locate the clip and secure the clip to the rim in a manner described in PCT GB2009/000778 and the subject matter of this application is hereby incorporated by reference. The cams 32 are formed by pressing out the material of the substantially planar section 8 of the mounting portion.

Thus, it will be seen that when the wheel balance assembly is mounted upon a wheel the clip 1 is between the weight and the wheel with the cams 32 on the first side of the mounting portion. This arrangement allows the cams 32 to interact with the wheel on which the wheel balance clip 1 is mounted which helps to retain the wheel balance clip 1 on the wheel.

Also visible in Figure 2 are two elements 200, 202 which are formed in the planar section 8 of the clip 1 by removing generally 'U' shaped regions of material from the clip 1. These elements 200, 202 provide portions of the clip 1 which are arranged to be deformed during assembly of the wheel balance assembly described later and as such may be thought of as interlocks.

As can be seen in Figure 4 first and second tabs 34 are located along a length 36 of the mounting portion opposing the connecting portion. The tabs each comprise a leg 38 (as can be seen best in Figure 3) extending away from the first side of the mounting portion 4. In this embodiment the legs 38 are curved and extend to form an inwardly (ie directed toward the lip 30) directed lip 40. The tabs 34 extend on either side of a channel 42 formed in the planar section of the mounting portion. The lip 40 provides a retaining means which is arranged to cooperate with the upper lip 30 thereby forming a pair of opposing jaws.

The clip is formed of steel, typically spring steel, although alternative materials may be suitable resilient for use. Typically a steel such as CS50 (ie Carbon Steel of 0.05% carbon) through to CS75 (Carbon Steel of 0.075% carbon) may be used in some embodiments. In some embodiments, the steel may also be heat treated to give a material roughly in the range of 26 to 48 HRC (Rockwell Hardness scale C).

Figure 5 is a section (along line AA shown in Figure 6) through a balance weight assembly comprising a clip as previously described and a balance weight held within the clip. The balance weight extends longitudinally and comprises a body 44 formed of steel and having a zinc plating. A first side face 50 of the balance weight has a shoulder 52 forming a channel within the first side face 50 and a first groove 56 formed therein. The first groove 56 receives the lip 30 of the tang 26; that is the end of the tang 26 is within the groove 56. The lip 30 is formed by pressing out material from the tang creating a depression or groove in the tang. A back face 58 of the balance weight is in close proximity to the second side 12 of the mounting portion. The back face 58 may be in contact with the second side 12. A second side face 60 (which may be thought of as a bottom face) opposed to the first side face 50 has a second groove 62 extending longitudinally along at least a portion of the second side face.

The second groove is arranged to receive the lip 40 of the or each tab 34; that is the end of each tab 34 is within the groove 62.

Some embodiments may be arranged to have a plurality of second grooves in the second side face 60. For example, two second grooves may be provided such that a second groove is provided for each of the first and second tabs 34.

The second groove 62 is formed with an accuracy so that the lip of the tang and the tab are securely located in their respective groove and the weight is effectively engaged with the clip forming a single assembly that is unlikely to separate in the course of normal use on a vehicle wheel.

The balance weight is formed by stamping the weight out of a sheet of steel. This allows the weight to be cheaply and rapidly manufactured. It is not necessary to ensure that the weights are formed to a high degree of accuracy and the tolerance of approximately +/- 5% may be accepted.

The shoulder 52 and first and second grooves 56 62 provided to receive the lip 30 of the tang and the lip 40 of the tabs 34 are however formed with a higher degree of accuracy and tolerances of roughly +/-0.1mm to +/-0.3mm are typical. More conveniently a tolerance limit of +/-0.2mm is utilised. The shoulder 52 and first and/or second groove 56 62 may be formed in the balance weight as part of the process of stamping. However, in other embodiments, the shoulder and groove may be formed in the weight as part of the process of assembling the clip and weight assembly as shown in Figure 5 and 6.

Figure 6 is a top view of a balance weight assembly. The shoulder 52 extends across a width of the first side face 50 and extends along a length 64, which is typically less than the length of the weight. The length 64 of the shoulder is longer than a length of the clip. A length of the first groove 56 is substantially the same as the lip 30 of the tang and a length of the second groove 62 may be substantially the same as the length 36 of the mounting portion. The tabs and lip are thus restricted in longitudinal movement relative to the weight and longitudinal stability is provided.

In other embodiments the lip of the tang may be formed by an angulation of the distal end of the tang. In yet further embodiments, the lip may be formed by adding material to the tang.

In an alternative embodiment suitable for use with a smaller weight the clip may be arranged such that the tabs and the lip of the tang fit over the weight and clamp over the front face of the weight (as opposed to fitting within the first groove and second groove). The rear face of the weight may be angled relative to the second side of the mounting portion and the shoulder is substantially the same width as the length of the clip. The connecting portion 6 is received within the shoulder 52 and provides further longitudinal stability of the balance weight relative to the clip.

Figures 7 to 10 provide views of a wheel balance weight 700 without the clip 1. The weight shown in these figures is ready for assembly with a clip 1 and has undergone initial processing steps after it has been stamped from sheet material.

In particular a pressing operation has been used to form the first groove 56 together with the channel 702 having the shoulder 52 at each end region thereof.

Two protrusions 800, 802 are provided, one at each end region 804, 806 of the weight on a back surface 808 (ie a side, in use, adjacent a wheel) of the weight 700. The protrusions are arranged to aid seating of the wheel balance assembly against a wheel during use and arranged to support the end regions 804, 806 against the wheel. As such, embodiments which have such protrusions 800, 802 may be less likely to vibrate, etc. which can lessen retention of the weight 700 within the clip 1. As the longitudinal length of the weight 700 increases then such protrusions 800, 802 may become more advantageous.

The second groove 62 is visible in Figure 9 and it can be seen that the second groove 62 is, in this embodiment, of a longer length that the first groove 56; the second groove 62 having a length substantially equal to the width of the clip 1 whereas the first groove 56 has a length substantially equal to the length of the lip 30.

A method of assembling a balance weight assembly is now described in relation to Figures 11 to 13 and the flow chart of Figure 14, the clips and balance weights having previously been manufactured separately.

As discussed above, the weight may be formed by stamping the weight from sheet steel. A zinc coating may be applied to the sheet steel prior to stamping the weight from the sheet. However, generally the weights are zinc coated after stamping in order to ensure that the entire weight is coated. A passivate coating can be applied over the zinc coating and may incorporate markings or colours to facilitate identification and use of the weights.

The clips are supplied to a bowl feeder 1400 which upon exit therefrom are orientated correctly 1402 for subsequent processing. Such orientation may be performed by means of camera in association with a image recognition system. In some embodiments, the image recognition system may be arranged to detect the presence of a logo, or the like, on each clip in order to determine if that weight has been correctly orientated. Clips which are not oriented correctly are returned to the bowl feeder.

Some embodiments may use an over balance rejection system to check the orientation of the clip to ensure that the clips are orientated in the desired orientation.

The balance weights are supplied to a separate bowl feeder 1404 and as with the clips mechanisms are employed to ensure that the weights are in a know orientation 1406 as they leave the bowl feeder. These mechanisms may the those used, mutatis mutandis, to orient the clips.

At least one groove and/or a shoulder is formed in the weight. Generally this is done by pressing 1408 of the weight to form the shoulder and/or groove(s).

A further step 1410 is orientation of the clip and weight preparatory to snap fitting the clip and weight together to form the completed assembly. This may be done either by orientating and presenting the clip and loading the weight over the clip or by presenting the weight first and loading the clip over the weight. In either method the weight is moved to present a portion between the jaws and the clip and weight are rolled relative to one another to insert the weight between the jaws and snap the weight and clip together.

Figures 11 to 13 show more detail as to how the clip and weight are connected. In Figures 11 to 13 the weight 700 is held in situ whilst the clip 1 is moved therearound.

As a first step, the lip 30 of the clip 1 is engaged into the first groove56. Laterally, pressure (as indicated by the arrow 1100) is applied to the second side face 60. This pressure 1100 forces the opposing jaws apart and thereby causes the lips 30 and 40 to move apart such that the height of the weight 1 can pass therebetween. Thus, the opposing jaws of the clip are opened and allow the weight 700 into position.

Although not shown in the Figures, a bar (or the like) may be placed through the loop of the spring portion in order to hold the clip in place and to stop the spring portion being permanently deformed as the jaws are opened.

Subsequently, and whilst the pressure 1100 is maintained, further pressure 1200 is applied to the first side 10 of the clip 1 to cause the lip 40 to pass onto the second side face 60 of the weight 700. At the end of this process the lip 40 engages into the second groove 62.

Subsequently, the pressure 1100 is removed from the weight 700 which causes the jaws and lips 30, 40 to return to their un-biased position due to the resilience of the material from which the clip is fabricated. Thereby, the lip 30 engages the first groove 56 and the lip 40 engages the second groove 62.

Subsequently, pressure 1300 is applied to the two elements 200, 202 which causes them to be pushed into the weight 700 thereby forming interlocks which helps to locate the clip 1 relative to the weight 700.

Once the weight 700 and clip 1 have been snapped together 1412, as discussed in Figures 11 to 13 above, to form a balance weight assembly the complete assembly is fed out of the assembly line 1414.

The balance assembly may have a protective coating applied. The coating may be a passivate coating applied to the while of the balance weight assembly or a plastics material coating may be applied to provide extra protection or for aesthetic reasons. In some methods a colour coding 1416 can be applied to the weight prior to packing into boxes.

It will be appreciated by the skilled man that the weight may be presented first and the clip rolled over and onto the weight. Alternatively the clip may be presented first and the weight partially inserted between the jaws the weight being rolled and snap fitted into the clip.

It will be appreciated that the groove and/or shoulder may be formed in the weight in an alternative process. Additionally the groove and/or shoulder may be formed by pressing of the weight but in the alternative may be formed by milling or other suitable processes. Such processes could include any of the following: milling, spark eroding, broaching, pressing from sheet material using a progression tool basis.

Figure 15 shows a side view of a clip in which the lip 30 is formed by formed by pressing a portion of the material forming the tang 26. Thus, it can be seen that the distal end 28 of the tang 26 extends in a different direction to the lip 30 which has been pressed from the tang 26.

## Claims

1. A wheel balance clip (1) arranged to attach a balance weight to a wheel, the wheel balance clip (1) comprising a spring portion (2) arranged to accommodate and attach to a rim of a wheel, a balance weight mounting portion (4) depending from the spring portion (2), the mounting portion (4) having a first side (10) arranged, in use, to be adjacent to a wheel on which the clip (1) is mounted and a second side (12) arranged to receive a weight, and opposing jaws (14), comprising a clasp and a retaining means, the clasp and retaining means being directed toward one another and being arranged, in use, to positively engage into a groove in a balance weight and retain therebetween a balance weight on the second side (12) of the mounting portion (4).

2. A clip according to claim 1 at least one of the following occurs:
a) it is the ends of the clasp and/or retaining means which are arranged to engage the groove in the balance weight; and
b) the first side (10) of the mounting portion (4) comprises one or more cams (32) arranged to engage a wheel on which the clip (1) is mounted.

3. A clip according to claim 1 or 2 in which the clasp comprises a tang (26) which is formed by a portion of the spring portion (2), where the tang (26) may be arranged to project in a direction opposed to the spring portion (2) and is generally arranged centrally along the length of the spring portion (2).

4. A clip according to any preceding claim in which the second inwardly directed retaining means comprises one or more tabs (34) and wherein the or each tab (34) may comprise a curved leg (38) extending away from the first side (10) of the mounting portion (4).

5. A wheel balance assembly comprising a balance weight and a clip in accordance with any of claims 1 to 4.

6. A kit comprising a plurality of clips according to any of claims 1 to 4 and a plurality of weights, at least some of which have a different mass when compared to other weights in the kit, wherein each of the weights is dimensioned such that it is receivable within a clip of the kit.

7. A balance weight suitable for use with a clip in accordance with any of claims 1 to 4 and arranged to form a wheel balance assembly.

8. A method of manufacturing a wheel balance assembly comprising providing a clip and a balance weight;
i. positioning at least one of the clip and the weight;
ii. orientating the clip and the weight relative to one another; and
iii. snap fitting the clip and the weight together.

9. A method according to claim 8 in which force is applied to the balance weight, may be during step iii., which causes opposing jaws of the clip to open and allow the weight into position.

10. A method according to claim 10 or 11 in which the clip is according to any of claims 1 to 4

11. A method according to any of claims 8 to 10 wherein the clip is positioned first and the balance weight orientated relative to the clip wherein the balance weight is orientated such that the balance weight can be inserted between jaws of the clip and rolled or rotated between the jaws of the clip to secure the weight or wherein
the balance weight is positioned first and the clip orientated relative to the weight such that clip is orientated with jaws either side of the balance weight and the clip is subsequently rolled relative to the balance weight so as to snap fit to secure the balance weight.

12. A method according to any of claims 8 to 11 in which a coating is applied to the balance weight prior to assembly of the clip and the weight.

13. A method according to any of claims 8 to 12 in which the balance weight is modified prior to assembly of the clip and the weight by the formation of a channel and/or a groove arranged to cooperate with the ends of a clasp and the retaining means constituting the jaws of the clip and in which the channel and/or groove may be formed on side faces of the balance weight.

14. A method according to claim 13 as it depends from claim 12 in which the channel and/or groove are created after the coating has been applied to the weight.

15. A method according to claims 13 or 14 in which the channel and/or groove are formed as part of the assembly of the clip and weight, wherein the balance weight may be formed by stamping, and wherein the balance weights may be provided in a plurality of different sizes each having a different mass.
